# EUROPEAN PATENT APPLICATION

(11) **EP 4 826 883 A1**
(43) Date of publication of application: **21.10.2026**
(21) Application number: 26169524.1
(22) Date of filing: 31.03.2026
(51) Int. Cl.: H01M 50/383, H01M 10/613, H01M 10/6563, H01M 10/6566, H01M 50/204, H01M 50/367

(54) **MOVABLE FLAME-BARRIER PLATE FOR A BATTERY PACK**

(30) Priority: 14.04.2025 US 202519178288
(71) Applicant: Schneider Electric IT Corporation, Foxboro, MA 02035 (US)
(72) Inventor: VELUSAMY, Tharani Kumar, Foxboro, 02035 (US); KV, Sundaraaman, Foxboro, 02035 (US)
(74) Representative: Openshaw & Co.

(57) **Abstract**

A battery pack (10) includes an enclosure (12), a heat-source component (24) disposed in the enclosure (12), and a flame-barrier plate (36, 38, 132) coupled to the enclosure (12). The flame-barrier plate (36, 38, 132) is configured to be in an open position or a closed position. The battery pack (10) further includes an actuator (140) configured to support the flame-barrier plate (36, 38, 132) in the open position. The flame-barrier plate (36, 38, 132) is configured to transition to the closed position when support from the actuator (140) is removed. The battery pack (10) further includes a sensor (142) and a controller configured to receive a thermal-runaway signal from the sensor (142), and control the actuator (140) to remove support from the flame-barrier plate (36, 38, 132) in response to receiving the thermal-runaway signal.

## Description

### BACKGROUND

### 1. Field of Disclosure

The present disclosure relates generally to batteries used in power systems, and more particularly to a flame arresting system including a movable flame-barrier plate for a battery pack that is configured to inhibit propagation of flame emanating from the battery pack within a power system.

### 2. Discussion of Related Art

Battery packs, such as lithium-ion battery packs, may be used in various applications, including uninterruptible power supply (UPS) applications. The battery packs may provide backup power to the UPS. Lithium-ion cells are superior to alternative battery power sources due to their high energy density, ability to withstand cycling, low self-discharge thereby providing a longer backup time and prolonged use and storage life.

A battery pack may include any combination of a mechanical enclosure, battery cell modules, a battery management system (BMS), a printed circuit board (PCB), and/or requisite interconnections to provide both power and communications. An enclosure having an acceptable ingress protection rating may be used when forced or natural air cooling is devised to keep the cell temperatures and electronic components under the prescribed safe thermal limit.

Due to the internal defects in the cells during manufacturing or abuse, such as internal or external short circuits or excessive heating, an individual battery cell may go into thermal runaway, during which the battery cell generates a significant amount of heat. If the heat transferred between adjacent cells during a thermal runaway event is greater than the safe operating temperature of the cell, neighboring cells will also go into thermal runaway. An acceptable regulatory standard requires multiple levels of protection enabled by both software and electrical hardware on the BMS to prevent or otherwise limit thermal runaway.

### SUMMARY

One aspect of the present disclosure is directed to a battery pack comprising an enclosure, a heat-source component disposed in the enclosure, and a flame-barrier plate coupled to the enclosure. The flame-barrier plate is configured to be in an open position or a closed position. The battery pack further comprises an actuator configured to support the flame-barrier plate in the open position. The flame-barrier plate is configured to transition to the closed position when support from the actuator is removed. The battery pack further comprises a sensor and a controller configured to receive a thermal-runaway signal from the sensor, and control the actuator to remove support from the flame-barrier plate in response to receiving the thermal-runaway signal.

Embodiments of the battery pack further may include an exhaust associated with the enclosure. The exhaust may be configured to exhaust heat generated by the heat-source component when the flame-barrier plate is in the open position. The exhaust may include a vent provided at one end of the enclosure and an air moving device provided at an opposite end of the enclosure. The air moving device may include a fan module coupled to the enclosure. The fan module may be configured to move air within the enclosure. The enclosure may be a rectangular-cuboid structure having a first end at the one end of the enclosure and a second end at the opposite end of the enclosure. The heat-source component may include a battery module having a plurality of battery cells. Each battery cell of the plurality of battery cells may include a lithium-ion battery. The flame-barrier plate may be positioned adjacent to the battery module. The actuator may include an actuator arm configured to engage and support a lower edge of the flame-barrier plate when extended to maintain the flame-barrier plate in the open position. The controller, when receiving the thermal-runaway signal from the sensor, may control the actuator to retract the actuator arm to remove support from the flame-barrier plate. The flame-barrier plate may include a generally planar, solid body.

Another aspect of the present disclosure is directed to a method of preventing airflow within a battery pack experiencing a thermal-runaway event. In one embodiment, the method comprises: supporting a flame-barrier plate in an open position within an enclosure of the battery pack; when detecting a thermal-runaway event, generating a thermal-runaway signal from a sensor; and in response to receiving the thermal-runaway signal, controlling an actuator to remove support from the flame-barrier plate to move the flame-barrier plate in a closed position.

Embodiments of the method further may include moving air within the enclosure through an exhaust configured to exhaust heat generated by the heat-source component when the flame-barrier plate is in the open position. The exhaust may include a vent provided at one end of the enclosure and an air moving device provided at an opposite end of the enclosure. The air moving device may include a fan module coupled to the enclosure. The fan module may be configured to move air within the enclosure. The battery pack may include a battery module having a plurality of battery cells. Each battery cell of the plurality of battery cells may include a lithium-ion battery. The flame-barrier plate may be positioned adjacent to the battery module. Supporting the flame-barrier plate in the open position may include engaging and supporting a lower edge of the flame-barrier plate with an actuator arm of the actuator when extended to maintain the flame-barrier plate in the open position. A controller, when receiving the thermal-runaway signal from the sensor, may control the actuator to retract the actuator arm to remove support from the flame-barrier plate.

Yet another aspect of the present disclosure is directed to a non-transitory computer-readable medium storing thereon sequences of computer-executable instructions for controlling movement of a flame-barrier plate from an open position to a closed position within an enclosure of a battery pack. The sequences of computer-executable instructions including instructions that instruct at least one processor to: control an actuator to support a flame-barrier plate in an open position within an enclosure of the battery pack; when detecting a thermal-runaway event, generate a thermal-runaway signal from a sensor; and control, in response to receiving the thermal-runaway signal, to move the flame-barrier plate to a closed position.

Embodiments of the non-transitory computer-readable medium further may include, when supporting the flame-barrier plate in the open position, engaging and supporting a lower edge of the flame-barrier plate with an actuator arm of the actuator when extended to maintain the flame-barrier plate in the open position. The controller, when receiving the thermal-runaway signal from the sensor, may control the actuator to retract the actuator arm to remove support from the flame-barrier plate.

### BRIEF DESCRIPTION OF THE DRAWINGS

For a better understanding of the present invention, reference is made to the figures which are incorporated herein by reference and in which:
FIG. 1 is a perspective view of an exemplary battery pack with a cover or top removed to show an interior of the battery pack;
FIG. 2 is a perspective view of the battery pack similar to FIG. 1 with components removed from the interior of the battery pack to show aspects of the battery pack;
FIG. 3 is a perspective view of an exemplary front flame-arresting plate;
FIG. 4 is a perspective view of an exemplary back flame-arresting plate;
FIG. 5 is a perspective view of the battery pack showing a flame-barrier plate of an embodiment of the present disclosure;
FIG. 6A is a front end view showing the flame-barrier plate in an open condition with an actuator supporting the flame-barrier plate;
FIG. 6B is a side view thereof;
FIG. 7A is a front end view showing the flame-barrier plate in a closed condition with the actuator being released from supporting the flame-barrier plate;
FIG. 7B is a side view thereof;
FIG. 8 is a perspective view of the actuator; and
FIG. 9 is a diagram of a method of controlling the flame-barrier plate.

### DETAILED DESCRIPTION

Various embodiments in the present disclosure mitigate risks due to a thermal runaway event. For example, various embodiments may mitigate the risk of fire propagating from a device containing the batteries. Various embodiments may mitigate the risk of explosions in the device containing the batteries. A thermal runaway event may include an electrochemical cell increasing its temperature through self-heating in an uncontrolled fashion. The thermal runaway progresses when the generation of heat from the cell is at a higher rate than the heat it can dissipate and crosses the safe operating limit of the cell. This may lead to a fire, explosion, and/or gas emissions.

During a thermal runaway event, there is a risk of a flame propagating outside the unit. It may be desirable to contain the flame within the equipment and at the same time prevent the flame from propagating to other cells which can further trigger an incident.

In some embodiments, flame propagation outside the battery pack may be eliminated or reduced using a flame arrester assembly, which in some embodiments may include a flame-barrier plate. The flame-barrier plate is coupled to an actuator that is configured to support the flame-barrier plate in an open position. A sensor is provided in the battery pack to detect a temperature of the cell. The sensor is coupled to a controller, configured to control operation of the actuator. If a thermal event is detected by the sensor, the actuator is actuated to cause the flame-barrier plate from its supported open position to a closed position.

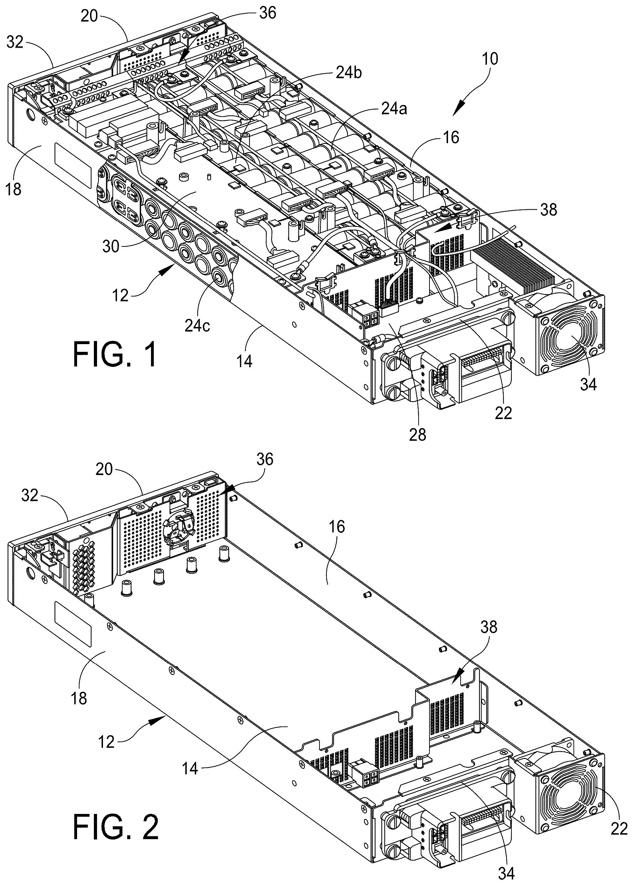

Referring now to the drawings, and more particularly to FIG. 1, an exemplary battery pack is generally indicated at 10. In the shown embodiment, the battery pack 10 includes an enclosure, generally indicated at 12, which is configured to support components of the battery pack. The enclosure 12 is a generally rectangular-cuboid structure that is shaped and sized to be inserted within a UPS to provide battery power to the UPS. In one embodiment, the enclosure 12 includes a bottom 14, two relatively long sides 16, 18, two relatively short ends 20, 22 and a top or cover, which is removed and not shown for illustration purposes. The shape and size of the enclosure 12 can be tailored to the intended use of the battery pack 10. The enclosure 12 is preferably fabricated from a rigid material having high stiffness and strength. In some embodiments, the enclosure 12 can be fabricated from steel or aluminum, or a suitable lightweight, rigid material, such as carbon fiber-reinforced plastic (CFRP) or glass fiber reinforced plastic (GFRP) but not limited to these materials alone.

The battery pack 10 further includes several cells, i.e., cell modules, indicated at 24a, 24b, 24c, which are supported by the enclosure 12. The cell modules 24a, 24b, 24c may be referred to herein as a heat-source component. In the shown embodiment, the battery pack 10 includes three cell modules 24a, 24b, 24c provided in the enclosure 12; however, it should be understood that any number of cell modules can be provided depending on the size, shape and orientation of the battery pack. Each cell module 24a, 24b, 24c may include several battery cells that extend crosswise with respect to a length of the cell module. Specifically, the battery cells may be arranged in pairs, with one pair of battery cells stacked vertically on one another having positive ends facing one side of the cell module, e.g., cell module 24a, and an adjacent pair of battery cells having negative ends facing the same side of the cell module. In one example, the polarities of the pairs of battery cells alternate along the length of the cell module. It should be noted that the battery cells of the cell modules 24a, 24b, 24c can be configured in any suitable manner. Suitable battery connectors/interconnection mechanisms are provided to connect the battery cell modules 24a, 24b, 24c to one another and to other components of the battery pack 10.

The battery pack 10 further includes a battery management system (BMS), indicated at 28, a printed circuit board (PCB) including electronic components, indicated at 30, and requisite interconnections to provide both power and communications within the battery pack 10. The BMS 28 is an electronic system that manages the cell modules 24a, 24b, 24c of the battery pack 10 to protect the cell modules, monitor the state of the battery pack, calculate secondary data, report data, and balance cell modules. For example, the BMS 28 may be configured to monitor voltage, temperature, current, and state of balance of the battery cells 26 of the cell modules 24a, 24b, 24c. The PCB 30 is a set of analog signal conditioning circuitry that provides an interface. For example, the PCB 30 may be used as an interface with sensors associated with the cell modules 24a, 24b, 24c. In one embodiment, the PCB 30 may embody a printed circuit board mounted within an interior of the enclosure on top of the cell modules 24a, 24b, 24c.

Referring additionally to FIG. 2, the enclosure 12 of the battery pack 10 further is designed to permit air to flow through the enclosure 12 to cool the battery cell modules 24a, 24b, 24c. In one embodiment, one end of the enclosure 12, e.g., end 20, includes a vent 32 formed therein. The vent 32 may be referred to as an air inlet for the enclosure 12. The vent 32, which is positioned adjacent to side 16 on the end 20 of the enclosure 12, may include a pattern of openings that enable air to enter into the interior of the enclosure 12. The size and number of openings can be selected based on the desired airflow through the interior of the enclosure 12. The battery pack 10 further includes a fan module 34 provided on the opposite end, e.g., end 20, of the enclosure 12. The fan module 34 may be referred to as an air outlet for the enclosure 12. The provision of the vent 32 and the fan module 34 may together be referred to herein as an exhaust, which is associated with the enclosure 12 of the battery pack 10, to enable air to flow through the enclosure 12. In the shown embodiment, the fan module 34 is configured to draw air into the interior of the enclosure 12 through the vent 32. The fan module 34 includes a generally rectangular-cuboid casing or housing that is configured to support the components of the fan module 34.

In one embodiment, the housing of the fan module 34 includes an axial fan having a motor supported by a support structure, and a plurality of fan blades that extend from the motor. The axial fan can be configured to rotate in one direction, but can be configured to be reversible to rotate in clockwise and counterclockwise directions. The motor can include a speed motor or a variable speed motor to vary a rate of rotation of the axial fan. The fan module 34 further includes a protective cover at the end of the casing to protect an operator from the axial fan during operation while enabling air to flow through the fan module 34.

Aspects of the present disclosure are directed to an arrester plate assembly that includes one or more flame-barrier plates. In one embodiment, one or more arrester plates are disposed within the interior of the enclosure 12 of the battery pack 10. The arrester plate is a device having perforations or openings formed therein that allow free passage of gas but interrupts or inhibits the passage of flame. The arrester plate is configured to prevent the transmission of flame generated by the cell modules (as by a thermal runaway event) by extinguishing the flame with the surface of the plate. Such a flame is unable to pass through the small passages created by the perforations in the plate. However, gases are enabled to pass through the perforations formed in the plate. As is known, the arrester plate absorbs heat from a flame to drop the burning air/gas mixture below an ignition temperature thereby preventing the flame from forming.

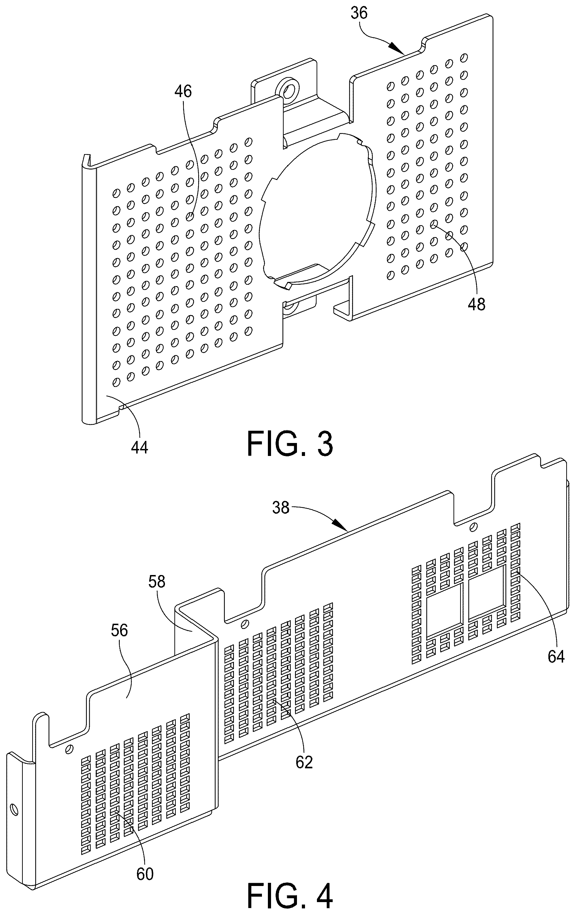

In one embodiment, with additional reference to FIG. 3, an arrester plate assembly includes a front arrester plate, generally indicated at 36 and a back arrester plate, generally indicated at 38. As shown, the front arrester plate 36 is positioned adjacent to the vent 32 of end 20 and extends vertically within the interior of the enclosure 12 in a direction that is approximately parallel to the end 20. In a certain embodiment, the front arrester plate 36 includes a planar body 44 that has a first pattern of openings, indicated at 46, and a second pattern of openings, indicated at 48. The planar body 44 is positioned vertically within the interior of the enclosure 12 and parallel to the end 20, adjacent to the ends of the cell modules 24a, 24b, 24c. In the shown embodiment, the front arrester plate 36 is suitably secured to the enclosure 12.

Referring additionally to FIG. 4, the back arrester plate 38 is provided at the opposite end of the enclosure 12 proximate to end 22, which is proximate to the fan module 34. As shown, there is a space between the back arrester plate 38 and the end 22 of the enclosure 12 to enable gas (smoke) to flow through the fan module 34 when the fan module is operated to draw air through the enclosure 12. As shown, the back arrester plate 38 includes a relatively planar body 56 that spans a width of the enclosure 12 between sides 16, 18. The planar body 56 of the back arrester plate 38 can be configured with one or more steps, e.g., step 58, to accommodate the lengths of the cell modules 24a, 24b, 24c.

The fan module 34 is positioned on one side of the enclosure, e.g., adjacent to side 16, at the end 22 of the enclosure. In an effort to draw air evenly through the fan module 34 across a width of the enclosure 12, the back arrester plate 38 includes three patterns of openings, namely a first pattern of openings 60, a second pattern of openings 62, and a third pattern of openings 64 formed therein. The arrangement is such that the first pattern of openings 60 is aligned with and corresponds to the cell module 24a, the second pattern of openings 62 is aligned with and corresponds to the cell module 24b, and the third pattern of openings 64 is aligned with and corresponds to the cell module 24c.

As shown in FIG. 4, the first pattern of openings 60 is aligned with and corresponds to the fan module 34. To draw air evenly through the enclosure 12, in one embodiment, each opening of the third pattern of openings 64 is slightly larger than each opening of the second pattern of openings 62, and each opening of the second pattern of openings 62 is slightly larger than each opening of the first pattern of openings 60. Thus, the third pattern of openings 64 enables more air to be drawn through the back arrester plate 38 than the second pattern of openings 62, and the second pattern of openings 62 enables more air to be drawn through the back arrester plate than the first pattern of openings 60. The size, shape and pattern of openings can be selected to optimize the performance of the back arrester plate 38.

As shown in FIG. 1, since cell modules 24b, 24c are each longer in length than cell module 24a, the step 58 in the planar body 56 of the back arrester plate 38 is provided to accommodate the difference in lengths. It should be understood that the back arrester plate 38 can be configured to accommodate cell modules of varying lengths and widths.

The front arrester plate 36 and the back arrester plate 38 may be optimized to cool the cell modules 24a, 24b, 24c by allowing air into the enclosure 12, which may be used to maintain the cell modules within a prescribed temperature range. The front arrester plate 36 and the back arrester plate 38 may be fabricated from any suitable flame-retardant material to prevent the flame propagating within the enclosure 12.

The openings of the front arrester plate 36 provide an atmospheric air inlet configured to enable 12% airflow therethrough. The openings of the back arrester plate 38 provide an atmospheric air inlet configured to enable 15% airflow therethrough. Each of the front and the back arrester plates 36, 38 is designed with a 2 mm cutout so that the plate acts as a barrier for flame and allows air to flow through the holes. It should be understood that the front arrester plate 36 and back arrestor plate 38 can be configured to accommodate cell modules air flow requirements.

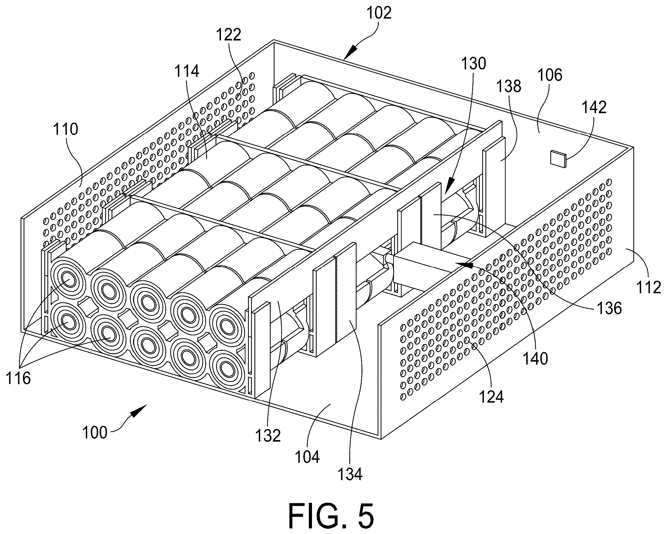

Referring to FIG. 5, another embodiment of a battery pack, generally indicated at 100, is shown and described below. The battery pack 100 is configured similarly to battery pack 10, and includes the same or similar components as battery pack 10, including, without limitation, one or more battery cell modules, a BMS, a PCB, and a fan module. FIG. 5 illustrates a portion of the battery pack 100 so some of the components may not be shown. In the shown embodiment, the battery pack 100 includes an enclosure, generally indicated at 102, which is configured to support components of the battery pack. The enclosure 102 is a generally rectangular-cuboid structure that is shaped and sized to be inserted within a UPS to provide battery power to the UPS. In one embodiment, the enclosure 102 includes a bottom 104, a first side indicated at 106, a second side, which is removed to show the interior of the enclosure 102, two ends 110, 112 and a top or cover, which is removed and not shown for illustration purposes. The shape and size of the enclosure 102 can be tailored to the intended use of the battery pack 100. As with enclosure, 12, the enclosure 102 is preferably fabricated from a rigid material having high stiffness, flame retardant, good thermal conductivity and structural strength.

The battery pack 100 further includes at least one cell module, indicated at 114, which is supported by the enclosure 102. Although a single cell module 114 is shown, it should be understood that the battery pack 100 can include any number of cell modules depending on the size, shape and orientation of the battery pack 100. The cell module 114 includes several battery cells, each indicated at 116. In one embodiment, each battery cell 116 of the cell module 114 includes a lithium-ion battery cell. In other embodiments, each battery cell 116 of the cell module 114 can include other appropriate types of battery cells. Suitable battery connectors/mounting provisions (not shown) are provided to connect the cell module 114 to other cell modules and to other components of the battery pack 100.

The ends 110, 112 of the enclosure 102 of the battery pack 100 are configured to permit air to flow through the enclosure 102 to cool the battery cell module 114. As shown, end 110 includes a first vent 122 formed therein. Similarly, end 112 includes a second vent 124 formed therein. The vents 122, 124 each include a pattern of openings that enable air to enter into the interior of the enclosure 102. The size and number of openings for each vent 122, 124 can be selected based on the desired airflow through the interior of the enclosure 102. Although not shown, the battery pack 100 further includes a fan module to draw air through the enclosure 102.

The battery pack 100 further includes a flame-barrier plate assembly, generally indicated at 130, provided within the interior of the enclosure 102. As shown, the flame-barrier plate assembly 130 includes a barrier plate 132, three support elements 134, 136, 138, and an actuator, generally indicated at 140, that is configured to engage and support the barrier plate 132. The barrier plate 132 includes a generally planar, solid body that extends across the enclosure 102. The barrier plate 132 is supported by the support elements 134, 136, 138 and positioned adjacent to the cell module 114. As shown, each support element 134, 136, 138 includes a slot that is configured to receive the barrier plate 132. The barrier plate 132 of the flame-barrier plate assembly 130 is configured to move between an open position or a closed position. As shown in FIG. 5, the barrier plate 132 of the flame-barrier plate assembly 130 is in the open position in which air is capable of flowing through the battery cells of the battery cell module. The actuator 140 is shown supporting the barrier plate 132 in the open position. As will be described in greater detail below, the actuator 140 can be operated to remove support of the barrier plate 132 to transition the barrier plate 132 to the closed position.

The battery pack further includes a sensor, indicated at 142, and a controller embodying either a BMS or a PCB. Although not shown in FIG. 5, the battery pack 100 further includes the BMS and the PCB, which are similar to BMS 28 and PCB 30, respectively. The controller is configured to receive a thermal-runaway signal from the sensor 142 and to control the actuator 140 to remove support from the barrier plate 132 of the flame-barrier plate assembly 130 in response to receiving the thermal-runaway signal. As noted above, thermal runaway event may include an electrochemical cell increasing its temperature through self-heating in an uncontrolled manner.

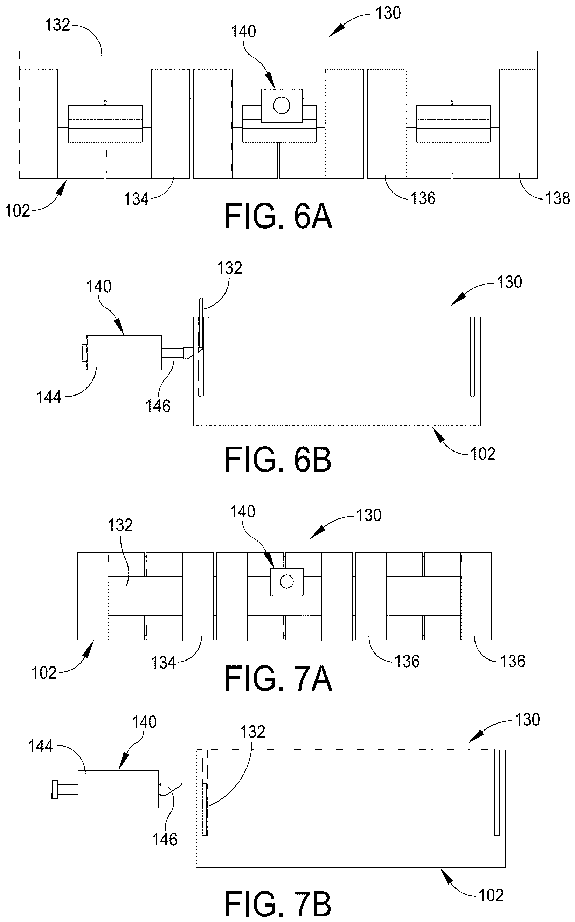

Referring additionally to FIGS. 6A and 6B and to FIGS. 7A and 7B, the barrier plate 132 of the flame-barrier plate assembly 130 is shown in the open position (FIGS. 6A and 6B) and shown in the closed position (FIGS. 7A and 7B). FIG. 6B illustrates the actuator 140 supporting the barrier plate 132 in the open position. As shown, the actuator includes a housing 144 configured to support an actuator arm 146 to engage and support a lower edge of the barrier plate 132 when extended to maintain the barrier plate 132 in the open position. The arrangement is such that the controller, when receiving the thermal-runaway signal from the sensor 142, controls the actuator 140 to retract the actuator arm 146 into the housing 144 to remove support from the barrier plate 132. FIG. 7B illustrates the actuator 140 disengaged from the barrier plate 132, with the barrier plate 132 being in a closed position. The actuator arm 146 of the actuator 140 is retracted thereby allowing the barrier plate 132 to drop within the slots of the support elements 134, 136, 138.

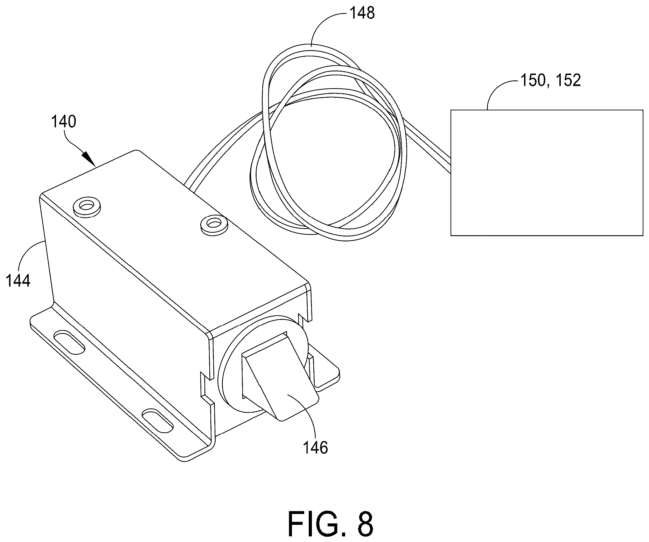

Referring to FIG. 8, the actuator 140 includes the housing 144, which is configured to support the actuator arm 146 in the extended and retracted positions. The housing 144 is configured to be secured to the bottom wall 104 of the enclosure 102 to secure the actuator 140 to the enclosure 102. The actuator 140 further includes at least one wire 148, which is configured to electrically couple the actuator 140 to the BMS 150 or the PCB 152 to provide control to the actuator 140. As noted, upon receiving the thermal-runaway signal from the sensor 142, the BMS 150 or the PCB 152 activates the actuator 140 to retract the actuator arm 146 into the housing 144, thereby removing support to the barrier plate 132. The result is that the barrier plate 132 drops to the closed position to inhibit airflow through the enclosure 102 thereby preventing thermal runaway of the cell module 114.

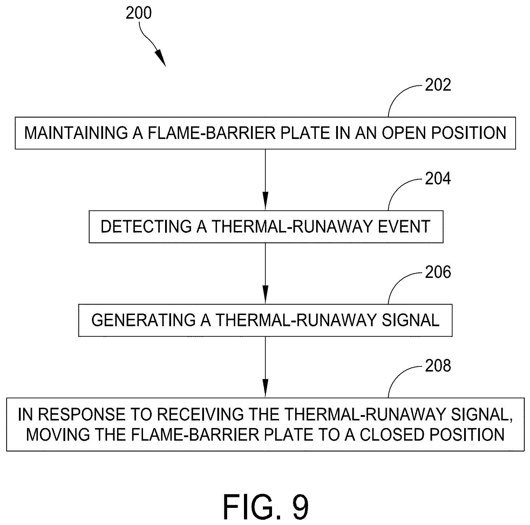

Referring to FIG. 9, a method of preventing airflow within the battery pack that is experiencing a thermal-runaway event is generally indicated at 200. As shown, at step 202, the method 200 includes maintaining or supporting the barrier plate 132 of the flame-barrier plate assembly 130 in the open position within the enclosure 102 of the battery pack 100. At step 204, the method 200 includes detecting a thermal-runaway event. At step 206, the method includes generating the thermal-runaway signal from the sensor 142. At step 208, in response to receiving the thermal-runaway signal, the method 200 includes controlling the actuator 140 to remove support from the barrier plate 132 to move the barrier plate 132 in a closed position. As noted, supporting the barrier plate 132 in the open position includes engaging and supporting the lower edge of the barrier plate 132 with the actuator arm 146 of the actuator 140 when extended to maintain the barrier plate 132 in the open position. The controller, e.g., the BMS 150 or the PCB 152, when receiving the thermal-runaway signal from the sensor 142, controls the actuator 140 to retract the actuator arm 146 to remove support from the barrier plate 132.

Another aspect of the present disclosure is directed to a method of assembling the battery pack 100. In one embodiment, the method includes providing the enclosure 102 as shown and described herein and positioning one or more battery cell modules 114 within the interior of the enclosure 102. Other components, such as the BMS 150 and the PCB 152, and associated components and wiring, further can be positioned and installed within the interior of the enclosure 102 of the battery pack 100. Once the battery cell module 114 and the components are positioned and installed within the interior of the enclosure 102, the method further includes positioning the flame-barrier plate assembly 130 within the interior of the enclosure 102. The support elements and the actuator 140 are suitably secured to walls of the enclosure 102 and the barrier plate 132 is positioned within the support elements 134, 136, 138. The method further includes moving air across the battery cell module 114, with the enclosure 102 including the vents 122, 124 provided at the ends of the enclosure.

One aspect of the disclosure is to protect the battery pack 100 from thermal runaway propagation by introducing solenoid actuator 140 to activate one or more barrier plates 132. While cell temperature raising beyond safety limit, a battery management system (BMS) 150 or a printed circuit board (PCB) 152 of the battery pack 100 activates the solenoid actuator 140 to release the barrier plate 132 to achieve the closed position. The barrier plate 132 blocks the module openings, e.g., vents 122, 124, which is provided for air flow to reduce temperature of the battery cells 116 of the cell module 114, and thus prevent a flame from exiting the enclosure 102 of the battery pack 100.

Various controllers may execute various operations discussed above, including operations performed by controller, including the BMS 150 and the PCB 152. Using data stored in associated memory and/or storage, the controller also executes one or more instructions stored on one or more non-transitory computer-readable media, which the controller may include and/or be coupled to, that may result in manipulated data. In some examples, the controller may include one or more processors or other types of controllers. In one example, the controller is or includes at least one processor. In another example, the controller performs at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

For the purposes of illustration only, and not to limit the generality, the present invention will now be described in detail with reference to the accompanying figures. This invention is not limited in its application to the details of construction and the arrangement of components set forth in the following description or illustrated in the drawings. The invention is capable of other embodiments and of being practiced or being carried out in various ways. Also, the phraseology and terminology used herein is for the purpose of description and should not be regarded as limiting. The use of "including," "comprising," "having," "containing" "involving," and variations thereof herein, is meant to encompass the items listed thereafter and equivalents thereof as well as additional items.

Having thus described at least one embodiment of the present invention, various alternations, modifications and improvements will readily occur to those skilled in the art. Such alterations, modifications and improvements are intended to be within the scope of the invention. Accordingly, the foregoing description is by way of example only and is not intended to be limiting. The invention's limit is defined only in the following claims and equivalents thereto.

Further aspects of the invention are provided by the subject matter of the following clauses:
Clause 1. A battery pack, comprising: an enclosure; a heat-source component disposed in the enclosure; a flame-barrier plate coupled to the enclosure, the flame-barrier plate being configured to be in an open position or a closed position; an actuator configured to support the flame-barrier plate in the open position, the flame-barrier plate being configured to transition to the closed position when support from the actuator is removed; a sensor; and a controller configured to receive a thermal-runaway signal from the sensor, and control the actuator to remove support from the flame-barrier plate in response to receiving the thermal-runaway signal.
Clause 2. The battery pack of Clause 1, wherein the heat-source component includes a battery module having a plurality of battery cells.
Clause 3. The battery pack of Clause 2, wherein each battery cell of the plurality of battery cells includes a lithium-ion battery.
Clause 4. The battery pack of Clause 2 or Clause 3, wherein the flame-barrier plate is positioned adjacent to the battery module.
Clause 5. The battery pack of any of Clauses 1 to 4, wherein the actuator includes an actuator arm configured to engage and support a lower edge of the flame-barrier plate when extended to maintain the flame-barrier plate in the open position.
Clause 6. The battery pack of Clause 5, wherein the controller, when receiving the thermal-runaway signal from the sensor, controls the actuator to retract the actuator arm to remove support from the flame-barrier plate.
Clause 7. The battery pack of any of Clauses 1 to 6, further comprising an exhaust associated with the enclosure, the exhaust being configured to exhaust heat generated by the heat-source component when the flame-barrier plate is in the open position.
Clause 8. The battery pack of Clause 7, wherein the exhaust includes a vent provided at one end of the enclosure and an air moving device provided at an opposite end of the enclosure.
Clause 9. The battery pack of Clause 8, wherein the air moving device includes a fan module coupled to the enclosure, the fan module being configured to move air within the enclosure.
Clause 10. The battery pack of Clause 8 or Clause 9, wherein the enclosure is a rectangular-cuboid structure having a first end at the one end of the enclosure and a second end at the opposite end of the enclosure.
Clause 11. The battery pack of any of Clauses 1 to 10, wherein the flame-barrier plate includes a generally planar, solid body.
Clause 12. A method of preventing airflow within a battery pack experiencing a thermal-runaway event, the method comprising: supporting a flame-barrier plate in an open position within an enclosure of the battery pack; when detecting a thermal-runaway event, generating a thermal-runaway signal from a sensor; and in response to receiving the thermal-runaway signal, controlling an actuator to remove support from the flame-barrier plate to move the flame-barrier plate in a closed position.
Clause 13. The method of Clause 12, wherein the battery pack includes a battery module having a plurality of battery cells.
Clause 14. The method of Clause 13, wherein each battery cell of the plurality of battery cells includes a lithium-ion battery.
Clause 15. The method of Clause 13 or Clause 14, wherein the flame-barrier plate is positioned adjacent to the battery module.
Clause 16. The method of any of Clauses 12 to 15, wherein supporting the flame-barrier plate in the open position includes engaging and supporting a lower edge of the flame-barrier plate with an actuator arm of the actuator when extended to maintain the flame-barrier plate in the open position.
Clause 17. The method of Clause 16, wherein a controller, when receiving the thermal-runaway signal from the sensor, controls the actuator to retract the actuator arm to remove support from the flame-barrier plate.
Clause 18. The method of any of Clauses 12 to 17, further comprising moving air within the enclosure through an exhaust configured to exhaust heat generated by the heat-source component when the flame-barrier plate is in the open position.
Clause 19. The method of Clause 18, wherein the exhaust includes a vent provided at one end of the enclosure and an air moving device provided at an opposite end of the enclosure.
Clause 20. The method of Clause 19, wherein the air moving device includes a fan module coupled to the enclosure, the fan module being configured to move air within the enclosure.
Clause 21. A non-transitory computer-readable medium storing thereon sequences of computer-executable instructions for controlling movement of a flame-barrier plate from an open position to a closed position within an enclosure of a battery pack, the sequences of computer-executable instructions including instructions that instruct at least one processor to: control an actuator to support a flame-barrier plate in an open position within an enclosure of the battery pack; when detecting a thermal-runaway event, generate a thermal-runaway signal from a sensor; and control, in response to receiving the thermal-runaway signal, to move the flame-barrier plate to a closed position.
Clause 22. The non-transitory computer-readable medium of Clause 21, wherein supporting the flame-barrier plate in the open position includes engaging and supporting a lower edge of the flame-barrier plate with an actuator arm of the actuator when extended to maintain the flame-barrier plate in the open position.
Clause 23. The non-transitory computer-readable medium of Clause 22, wherein the controller, when receiving the thermal-runaway signal from the sensor, controls the actuator to retract the actuator arm to remove support from the flame-barrier plate.

## Claims

1. A battery pack (10), the battery pack (10) comprising:
an enclosure (12);
a heat-source component (24) disposed in the enclosure (12);
a flame-barrier plate (36, 38, 132) coupled to the enclosure (12), the flame-barrier plate being configured to be in an open position or a closed position;
an actuator (140) configured to support the flame-barrier plate (36, 38, 132) in the open position, the flame-barrier plate (36, 38, 132) being configured to transition to the closed position when support from the actuator (140) is removed;
a sensor (142); and
a controller configured to
receive a thermal-runaway signal from the sensor (142), and
control the actuator (140) to remove support from the flame-barrier plate (36, 38, 132) in response to receiving the thermal-runaway signal.

2. The battery pack (10) of claim 1, wherein the heat-source component (24) includes a battery module (24) having a plurality of battery cells.

3. The battery pack (10) of claim 2, wherein each battery cell of the plurality of battery cells includes a lithium-ion battery.

4. The battery pack (10) of claim 2, wherein the flame-barrier plate (36, 38, 132) is positioned adjacent to the battery module (24).

5. The battery pack (10) of claim 1, wherein the actuator (140) includes an actuator arm (146) configured to engage and support a lower edge of the flame-barrier plate (36, 38, 132) when extended to maintain the flame-barrier plate (36, 38, 132) in the open position.

6. The battery pack (10) of claim 5, wherein the controller, when receiving the thermal-runaway signal from the sensor (142), controls the actuator (140) to retract the actuator arm (146) to remove support from the flame-barrier plate (36, 38, 132).

7. The battery pack (10) of claim 1, further comprising an exhaust associated with the enclosure (12), the exhaust being configured to exhaust heat generated by the heat-source component (24) when the flame-barrier plate (36, 38, 132) is in the open position.

8. The battery pack (10) of claim 7, wherein the exhaust includes a vent (32) provided at one end of the enclosure (12) and an air moving device (34) provided at an opposite end of the enclosure (12).

9. The battery pack (10) of claim 8, wherein the air moving device (34) includes a fan module (34) coupled to the enclosure (12), the fan module (34) being configured to move air within the enclosure (12).

10. The battery pack (10) of claim 8, wherein the enclosure (12) is a rectangular-cuboid structure having a first end at the one end of the enclosure (12) and a second end at the opposite end of the enclosure (12).

11. The battery pack (10) of claim 1, wherein the flame-barrier plate (36, 38, 132) includes a generally planar, solid body.

12. A method of preventing airflow within a battery pack (10) experiencing a thermal-runaway event, the method comprising:
supporting a flame-barrier plate (36, 38, 132) in an open position within an enclosure (12) of the battery pack (10);
when detecting a thermal-runaway event, generating a thermal-runaway signal from a sensor (142); and
in response to receiving the thermal-runaway signal, controlling an actuator (140) to remove support from the flame-barrier plate (36, 38, 132) to move the flame-barrier plate (36, 38, 132) in a closed position.

13. The method of claim 12, wherein supporting the flame-barrier plate (36, 38, 132) in the open position includes engaging and supporting a lower edge of the flame-barrier plate (36, 38, 132) with an actuator arm (146) of the actuator (140) when extended to maintain the flame-barrier plate (36, 38, 132) in the open position.

14. The method of claim 12 or claim 13, wherein a controller, when receiving the thermal-runaway signal from the sensor (142), controls the actuator (140) to retract the actuator arm (146) to remove support from the flame-barrier plate (36, 38, 132).

15. A computer program comprising computer-executable instructions for controlling movement of a flame-barrier plate (36, 38, 132) from an open position to a closed position within an enclosure (12) of a battery pack (10), the computer-executable instructions including instructions that instruct at least one processor to:
control an actuator (140) to support a flame-barrier plate (36, 38, 132) in an open position within an enclosure (12) of the battery pack (10);
when detecting a thermal-runaway event, generate a thermal-runaway signal from a sensor (142); and
control, in response to receiving the thermal-runaway signal, to move the flame-barrier plate (36, 38, 132) to a closed position.
